(19) Europäisches Patentamt
European Patent Office
Office européen des brevets

(11) **EP 1 511 599 B1**

(12) **EUROPÄISCHE PATENTSCHRIFT**

(45) Veröffentlichungstag und Bekanntmachung des Hinweises auf die Patenterteilung:
**19.11.2008 Patentblatt 2008/47**

(21) Anmeldenummer: **03752727.2**

(22) Anmeldetag: **08.05.2003**

(51) Int Cl.:
**B25B 23/145** (2006.01)

(86) Internationale Anmeldenummer:
**PCT/EP2003/004823**

(87) Internationale Veröffentlichungsnummer:
**WO 2003/097304 (27.11.2003 Gazette 2003/48)**

(54) **VERFAHREN ZUR STEUERUNG EINER HYDRAULISCHEN KOLBENZYLINDEREINHEIT**

METHOD FOR CONTROLLING A HYDRAULIC PISTON/CYLINDER UNIT

PROCEDE POUR LA COMMANDE D'UN ENSEMBLE CYLINDRE-PISTON HYDRAULIQUE

(84) Benannte Vertragsstaaten:
**AT BE BG CH CY CZ DE DK EE ES FI FR GB GR HU IE IT LI LU MC NL PT RO SE SI SK TR**

(30) Priorität: **17.05.2002 DE 10222159**

(43) Veröffentlichungstag der Anmeldung:
**09.03.2005 Patentblatt 2005/10**

(73) Patentinhaber: **Wagner, Paul-Heinz**
**53804 Much-Birrenbachshöhe (DE)**

(72) Erfinder: **Wagner, Paul-Heinz**
**53804 Much-Birrenbachshöhe (DE)**

(74) Vertreter: **Selting, Günther**
**Patentanwälte**
**von Kreisler, Selting, Werner**
**Postfach 10 22 41**
**50462 Köln (DE)**

(56) Entgegenhaltungen:
**EP-A- 0 638 394**       **US-A- 3 926 264**
**US-A- 4 294 110**       **US-A- 4 864 903**
**US-A- 5 737 992**

**Beschreibung**

Die Erfindung betrifft ein Verfahren zur Steuerung der Druckversorgung einer an eine Druckquelle angeschlossenen hydraulischen Kolbenzylindereinheit, welche einen Arbeitsvorgang aus abwechselnden Lasthüben und Rückhüben ausführt, sowie eine hydraulische Antriebseinrichtung zur Steuerung einer Kolbenzylindereinheit.

Kolbenzylindereinheiten werden häufig dazu benutzt, in wiederholten Lasthüben und Rückhüben einen Arbeitsvorgang auszuführen. Eine solche Anwendung besteht beispielsweise bei Kraftschraubern, wo ein Ratschenrad von einer Kolbenzylindereinheit gedreht wird, indem eine Rastklinke das Ratschenrad jeweils um ein Winkelsegment weiterdreht. Generell besteht die Schwierigkeit zu erkennen, wann der Arbeitsvorgang beendet ist und dann die Kolbenzylindereinheit zurückzufahren oder in Stellung zu belassen. Die Erkennung des Endes eines Arbeitsvorganges, bei dem eine definierte Kraft auf eine Last ausgeübt worden ist, ist in der Praxis schwierig. In der Regel erfolgt diese Erkennung durch eine Bedienungsperson, die feststellt, ob die Kolbenzylindereinheit sich noch bewegt. Ein Aufhören der Bewegung kann einerseits darauf zurückzuführen sein, dass die erforderliche Kraft auf die Last ausgeübt wurde, andererseits aber auch darauf, dass der Kolben der Kolbenzylindereinheit seine Endstellung erreicht hat. Bei einem hydraulischen Kraftschrauber muss der Anwender das Drehen der Schraube beobachten. Er sieht nicht, ob die Schraube festsitzt oder die Kolbenzylindereinheit die Kolbenendlage erreicht hat. Beim Stillstand der Kolbenzylindereinheit muss der Anwender entscheiden, ob die Schraubendrehung wegen Erreichen des gewünschten Drehmomentes beendet werden soll oder ob ein neuer Lasthub durchgeführt werden soll. Der Betrieb eines solchen hydraulischen Werkzeugs unterliegt also der Einschätzung des Anwenders. Hieraus ergeben sich Nachteile. Der Arbeitsvorgang ist nicht hinreichend sicher, d. h. die Erreichung des gewünschten Drehmoments ist nicht garantiert. Der Arbeitsvorgang wird auch nicht in kürzester Zeit ausgeführt, sondern es kann vorkommen, dass nach Beendigung des Arbeitsvorganges noch der Versuch eines weiteren Lasthubes unternommen wird. Außerdem ist die dauernde Aufmerksamkeit des Anwenders gefordert. Dadurch ergeben sich hohe Personalkosten.

Ein Verfahren und eine hydraulische Antriebseinrichtung, von denen die Oberbegriffe der Ansprüche 1 und 3 ausgehen, ist beschrieben in der Druckschrift U.S. 4,864,903. Hierbei wird der zeitliche Druckverlauf an einer Hydraulikleitung in Intervallen gemessen und die mittlere Steigung dPave des Druckes wird ermittelt. Am Ende eines Hubes wird die Endsteigung $dP_f$ gemessen. Wenn die Endsteigung größer ist als der Mittelwert des vorausgegangenen Hubes, wird entweder festgestellt, dass ein weiterer Hub erforderlich ist oder dass die Ratsche nicht gegriffen hat. Ist dagegen der Druckanstieg kleiner als der Mittelwert, bedeutet dies, dass das erforderliche Drehmoment erreicht ist und der Schraubvorgang beendet wird. Als Grenzwert des Anstiegs des hydraulischen Drucks wird also der Mittelwert des Druckanstieges bei dem vorausgegangenen Arbeitshub ausgewertet.

Der Erfindung liegt die Aufgabe zugrunde, ein Verfahren zur Steuerung der Druckversorgung einer hydraulischen Kolbenzylindereinheit anzugeben, bei dem der Arbeitsvorgang bei Erreichen der gewünschten Kraft automatisch beendet wird.

Die Lösung dieser Aufgabe erfolgt erfindungsgemäß mit den Merkmalen des Anspruchs 1.

Das Verfahren ermöglicht eine automatische Beendigung des Arbeitsvorganges aufgrund der Erkennung des Zustandes, dass der hydraulische Druck bei einem Lasthub nicht mehr imstande ist, weiter anzusteigen. Der vorgegebene Grenzwert beträgt entweder Null, oder es handelt sich um einen nahe bei Null liegenden Wert. Die Druckquelle wird auf einen bestimmten Endwert eingestellt, welcher entsprechend der gewünschten Endkraft gewählt wird. Der Zustand, dass die Kolbenzylindereinheit diese Kraft erzeugt, wird daran erkannt, dass ein weiterer Druckanstieg wegen der Druckbegrenzung der Druckquelle nicht möglich ist, so dass im darauf folgenden Intervall der Druckanstieg kleiner ist als Null oder ein anderer Grenzwert. Auf diese Weise kann das Erreichen des Zieles des Arbeitsvorganges leicht und vollautomatisch festgestellt werden.

Die Erfindung ist vorzugsweise bei hydraulischen Schraubgeräten anwendbar, bei denen eine Kolbenzylindereinheit über einen Ratschenantrieb eine Schraube dreht, bis ein gewünschtes Anzugsmoment erreicht ist. Andere Anwendungen ergeben sich bei Kolbenzylindereinheiten, die eine Last linear bewegen, beispielsweise bei Baggern oder Planierfahrzeugen oder bei Vortrieben, bei denen ein Objekt mit bestimmter Kraft in ein Substrat eingetrieben werden soll.

Um das Ende des Arbeitsvorganges, also das Ausüben einer bestimmten Kraft auf die zu bewegende Last, von dem Erreichen der Endstellung des Kolbens unterscheiden zu können, wird festgestellt, ob der Druck noch weiter ansteigen kann und mit welchem Druckgradienten er ansteigt. Wird ein Druckanstieg festgestellt, so ist das Ende des Arbeitsvorganges noch nicht erreicht.

Die Erfindung ermöglicht es, durch Erfassung des Druckes in der Druckleitung und durch Bildung des zeitlichen Druckgradienten den Betriebszustand der Kolbenzylindereinheit zu erfassen, ohne dass hierzu Endschalter oder andere Hilfseinrichtungen nötig wären. Ein weiterer Vorteil liegt darin, dass sämtliche Druckmessungen an der Druckquelle bzw. dem druckerzeugenden Aggregat vorgenommen werden können und an der Kolbenzylindereinheit keine Messeinrichtungen vorgesehen werden müssen. Die Höchstbelastung der Bauteile wird am Ende des Arbeitsvorganges erreicht und nur für kurze Zeit beibehalten, bis festgestellt wird, dass der Enddruck erreicht ist und keine weitere Druckerhöhung erfolgt. Diese Feststellung ist normalerweise in wenigen Millisekunden abgeschlossen.

Die Erfindung betrifft ferner eine hydraulische Antriebseinrichtung nach dem Anspruch 3, mit einer Kolbenzylindereinheit, die in Abhängigkeit von der zeitlichen Veränderung des hydraulischen Drucks gesteuert ist. Ein besonderer Vorteil besteht darin, dass die Steuereinrichtung zur Betätigung des Umschaltventils und zur Beendigung des Arbeitsvorganges an der Druckquelle angeordnet ist und mit Ausnahme der Hydraulikleitungen keine Verbindung zu der Kolbenzylindereinheit benötigt. Die Steuereinrichtung ist unabhängig von Größe und Bauart der Kolbenzylindereinheit. Sie arbeitet lediglich aufgrund der ihr zugeführten Drucksignale. Die Steuereinheit ist auch unabhängig von den verwendeten Hydraulikleitungen, d. h. von deren Durchmesser und Elastizitätsverhalten. Sie ist schließlich sogar unabhängig von der Art der benutzten Druckquelle. Die Druckquelle kann ein- oder mehrstufig ausgebildet sein. Bei einer mehrstufigen Druckquelle verändert sich das Liefervolumen in Abhängigkeit von der Größe des Druckes.

Schließlich kann die Erfindung sowohl bei einer doppelt wirkenden Kolbenzylindereinheit benutzt werden, die an eine Druckleitung oder eine Rücklaufleitung angeschlossen wird, als auch bei einer einfach wirkenden Kolbenzylindereinheit, die nur an eine einzige Leitung angeschlossen wird und eine Rückstellfeder enthält.

Im folgenden wird unter Bezugnahme auf die Zeichnungen ein Ausführungsbeispiel der Erfindung näher erläutert.

Es zeigen:

Fig. 1 das Schema einer hydraulischen Antriebseinrichtung aus einer Kolbenzylindereinheit und einer Druckquelle mit Umschaltventil und Steuereinrichtung,

Fig. 2 ein Diagramm des zeitlichen Verlaufs des Druckes während abwechselnder Last- und Rückhübe der Kolbenzylindereinheit und

Fig. 3 eine vergrößerte Darstellung der Einzelheit III aus dem Diagramm von Fig. 2.

Bei dem nachfolgend beschriebenen Ausführungsbeispiel der Erfindung handelt es sich um einen hydraulischen Kraftschrauber, der dazu dient, Schrauben anzuziehen, wobei ein gewünschtes Enddrehmoment erreicht wird. Ein solcher Kraftschrauber enthält eine hydraulische Kolbenzylindereinheit 10 mit einem Zylinder 11, in dem ein Kolben 12 bewegbar ist. Der Kolben 12 ist mit einer Kolbenstange 13 verbunden. Am Ende der Kolbenstange 13 befindet sich ein Ratschenhebel 14, der in die Verzahnung eines Ratschenrades 15 eingreift. Durch hin- und hergehende Bewegung der Kolbenstange 13 wird das Ratschenrad 15 intermittierend in Richtung des Pfeiles gedreht. Das Ratschenrad 15 ist mit einer (nicht dargestellten) Schlüsselnuss gekoppelt, die auf den zu drehenden Schraubenkopf aufgesetzt wird. Durch hin- und hergehendes Bewegen des Kolbens 12 wird die Schraube gedreht.

Die beiden Zylinderräume des Zylinders 11 sind über Hydraulikleitungen 16,17 mit einem hydraulischen Druckaggregat 18 verbunden, das ein Umschaltventil 19 enthält. Mit dem Umschaltventil 19 kann jede der Hydraulikleitungen 16,17 wechselweise mit einer Druckquelle 20 verbunden oder drucklos mit einem Rücklauf verbunden werden.

Die Steuerung des Umschaltventils 19 erfolgt durch eine Steuereinrichtung 21. Diese erhält Signale von zwei Drucksensoren 22,23, welche die Drücke der hydraulischen Leitungen 16,17 messen. Die Drucksensoren 22,23 sind vorzugsweise Bestandteil des Druckaggregates 18, so dass sie am Druckaggregat auch dann verbleiben, wenn die Leitungen 16,17 abgekuppelt werden.

Mit den Drucksensoren 22,23 wird der Betrieb der Kolbenzylindereinheit 10 in der nachfolgend beschriebenen Weise durch die Steuereinrichtung 21 gesteuert.

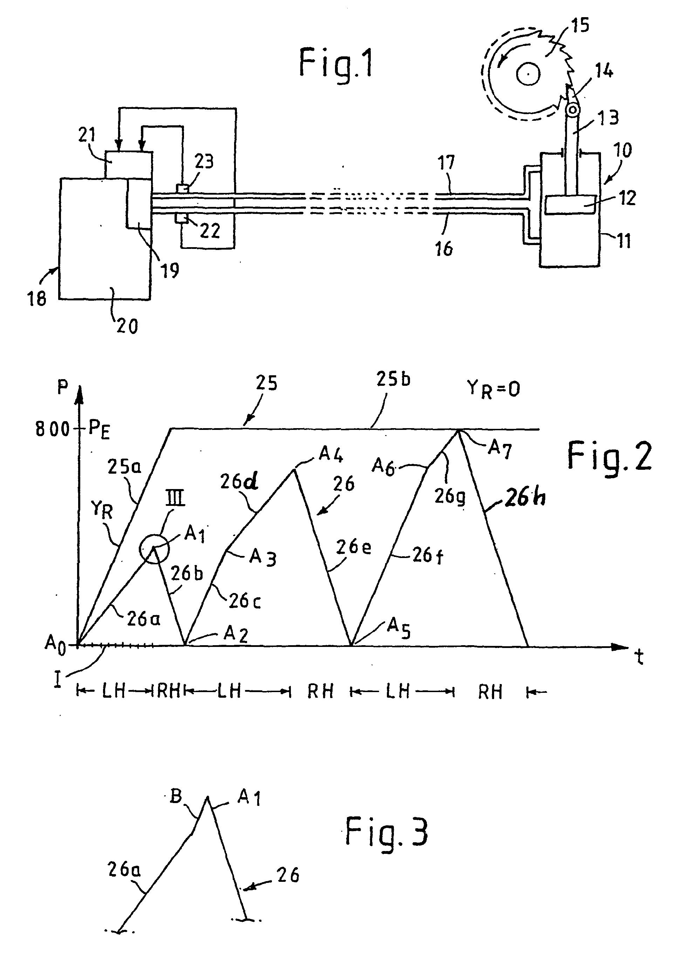

In Figur 2 ist die charakteristische Druck-Zeit-Kurve des Druckaggregats 18 dargestellt, die sich ergibt, wenn das Druckaggregat gegen eine abgesperrte Leitung arbeitet. Dabei ist ein einstufiger Betrieb vorausgesetzt, bei dem das Druckaggregat über den gesamten Druckbereich mit konstanter Förderrate arbeitet. Ausgehend vom Punkt $A_0$ baut sich nach einer im wesentlichen linearen Funktion bis zum Erreichen eines Endwertes $P_E$ auf, der beispielsweise 800 bar beträgt. Der Endwert $P_E$ wird vom Anwender eingestellt. Es handelt sich um denjenigen Druck, der das Anzugsmoment der zu drehenden Schraube bestimmt und bei dem der Arbeitsvorgang beendet werden soll. Die charakteristische Druck-Zeit-Kurve des jeweiligen Druckaggregats 18 wird in einem Kalibrierbetrieb vorab bestimmt und gespeichert. Die Zeitachse t ist in Zeitintervalle I unterteilt. Die Dauer eines Zeitintervalls beträgt 10 ms. Sie kann in Abhängigkeit von den Drücken oder in Abhängigkeit von dem Schraubwerkzeug oder vom Druckaggregat verändert werden. In den Abständen des Zeitintervalls I erfolgt eine Messung des Druckes P. Da die Intervalle I sämtlich die gleiche Länge haben, wird zur Bestimmung des Differentialquotienten $y = \dfrac{dP}{dt}$ die Druckdifferenz dP, die innerhalb eines Zeitintervalls auftritt, ausgewertet und in digitaler Form gespeichert. Bei der Referenzkurve 25 hat der Differentialquotient im Anstiegsbereich 25a den Wert $y_R$. Wenn der Enddruck $P_E$ erreicht ist, geht die Kurve 25 in den Sättigungsbereich 25b über, in dem der Druck konstant bleibt. In dem Sättigungsbereich hat der Differentialquotient $y_R$ den Wert Null.

In Figur 2 zeigt die Kurve 26 ein Beispiel von drei Lasthüben LH eines Arbeitsvorganges. In dem Abschnitt 26a steigt der von dem Drucksensor 22 gemessene Druck in der Leitung 16 im wesentlichen linear an, bis der Kolben 12 seine vordere Endstellung erreicht hat (Punkt $A_1$). Dann erfolgt der Rückhub, indem das Umschaltventil 19 von der Steuereinrichtung 21 umgeschaltet wird, so dass die Leitung 17 mit Druck beaufschlagt und die Leitung 16 mit dem Rücklauf verbunden wird. Der Abschnitt 26b in Figur 2 gibt den Rückhub an. Am Ende des Rückhubes entsteht in der Leitung 17 ein Enddruck, der geringer ist als der Enddruck $P_E$ in der Leitung 16 und beispielsweise 100 bar beträgt. Dieser Enddruck in der Leitung 17 entsteht, wenn der Kolben 12 seine hintere Endlage erreicht hat. Dies entspricht dem Punkt $A_2$ der Kurve 26. Das Erreichen des Endwertes des Rückführdruckes wird von dem Drucksensor 23 erkannt und an die Steuereinrichtung 21 gemeldet. Diese steuert daraufhin das Umschaltventil 19 um, so dass der nächste Lasthub LH im Punkt $A_2$ begonnen wird. Dieser Lasthub weist einen Abschnitt 26c auf, der die gleiche Steigung hat wie der Abschnitt 25a der Referenzkurve 25, weil der Kolben zunächst gegen die beim ersten Lasthub bereits angezogene Schraube arbeiten muss, die ein festes Widerlager bildet. Wenn der Punkt $A_3$ erreicht ist, bei dem der gleiche Druck herrscht wie im vorhergehenden Punkt $A_1$, dreht sich die Schraube wieder, so dass sich ein Abschnitt 26d anschließt, bei dem die Steigung kleiner ist als im Abschnitt 26c. Der Abschnitt 26d hat im wesentlichen die gleiche Steigung wie der Abschnitt 26a beim vorhergehenden Lasthub.

Am Punkt $A_4$ hat der Kolben 12 wieder seine vordere Endlage erreicht, und es folgt ein Rückhub RH, bei dem im Abschnitt 26e der Druck auf Null abfällt. Der Abschnitt 26e hat das selbe Gefälle wie der Abschnitt 26b des vorherigen Rückhubes.

Am Punkt $A_5$ beginnt der nächste Lasthub mit einem Abschnitt 26f, der bis zu einem Punkt $A_6$ reicht, bei dem der Druck gleich dem beim vorigen Lasthub erreichten maximalen Druck im Punkt $A_4$ ist. Der Abschnitt 26f hat wiederum die gleiche Steigung wie der Abschnitt 25a der Referenzkurve. An ihn schließt sich ein Abschnitt 26g an, bei dem ein Weiterdrehen der Schraube erfolgt, bis im Punkt $A_7$ der Enddruck $P_E$ erreicht ist.

Die Steuereinrichtung 21 stellt fest, wenn im Punkt $A_7$ der Differentialquotient y der Kurve 26 Null wird. Dann wird der Arbeitsvorgang (Schraubvorgang) als beendet angesehen, und es folgt ein Abschnitt 26h, bei dem der Kolben 12 in seine rückwärtige Endposition zurückgefahren wird.

Im Punkt $A_7$ kann zusätzlich geprüft werden, ob der vorgesehene Enddruck $P_E$ von 800 bar erreicht ist. Ist dieser Enddruck nicht erreicht, wird der Arbeitsvorgang als nicht vorschriftsmäßig ausgeführt verworfen.

Während des Arbeitsvorganges werden die Druckdifferenzwerte mehrerer aufeinander folgender Intervalle gespeichert, und aus den gespeicherten Werten wird der Durchschnittswert ermittelt. Dadurch wird vermieden, dass einzelne Ausreißer zu einer Fehlinterpretation führen.

Im folgenden, nicht Teil der erfindungsgemäßer Antriebseinrichtung bzw. Verfahrens, wird nun die Erkennung der Umschaltpunkte erläutert, an denen der Lasthub LH beendet und auf den Rückhub RH umgeschaltet wird. Diese Erkennung erfolgt ebenfalls durch Bestimmung des Gradienten der Kurve 26. In Figur 3 ist der Punkt $A_1$ der Kurve 26 vergrößert dargestellt. Der Abschnitt 26a endet, wenn der Kolben 12 seine vordere Endstellung erreicht hat. Dann folgt ein Abschnitt B, der die gleiche Steigung hat wie der Abschnitt 25a der Referenzkurve 25. Durch die laufende Messung des Druckgradienten wird nun erkannt, dass im Abschnitt B die Steigung größer geworden ist als im vorausgehenden Abschnitt 26a. Diese Vergrößerung des Druckgradienten ist das Kriterium dafür, dass der Kolben 12 den Umkehrpunkt erreicht hat. Wenn jeweils 20 Werte des Druckgradienten gespeichert werden, um daraus den Durchschnittswert zu ermitteln, hat bei 20 Zeitintervallen von je 1 ms Dauer der Abschnitt B eine Dauer von 20 ms. Nach dieser Zeit erfolgt die Betätigung des Umschaltventils 19 zur Einleitung des Rückhubes.

Die beschriebene Art der Erkennung der Kolbenendlage hat den Vorteil, dass sie vom absoluten Druck unabhängig ist und ohne besondere Einstellungen bei Aggregaten unterschiedlicher Bauart und Leistung angewandt werden kann. Die Kolbenendlage wird auch unverzüglich erkannt, ohne dass der Druck sich noch weiter aufbauen würde. Ein weiterer Vorteil besteht darin, dass die Steuereinrichtung 21 unabhängig ist vom Drukkaggregat 18 und für unterschiedliche Drücke und Förderleistungen gleichermaßen verwendet werden kann.

Die generelle Verarbeitung der Messergebnisse kann in der Weise erfolgen, dass immer der Durchschnitt der letzten fünf Messungen mit der aktuellen Messung verglichen wird. Vergrößert oder verkleinert sich der Wert der Druckdifferenz pro Intervall, so wird die Veränderung entsprechend den beschriebenen Zusammenhängen bewertet und als Steuerungssignal verarbeitet.

**Patentansprüche**

1. Verfahren zur Steuerung der Druckversorgung einer an eine Druckquelle (20) angeschlossenen hydraulischen Kolbenzylindereinheit (10), welche einen Arbeitsvorgang ausführt,
   bei welchem die Änderung des hydraulischen Drucks in Zeitintervallen (I) gemessen wird und der Arbeitsvorgang dann beendet wird, wenn der Anstieg des hydraulischen Drucks bei einem Lasthub innerhalb einer vorgegebenen Zeit kleiner ist als ein Grenzwert,
   **dadurch gekennzeichnet, dass**
   als Grenzwert ein vorgegebener Grenzwert benutzt wird, der im wesentlichen Null beträgt.

2. Verfahren nach Anspruch 1, **dadurch gekenn-**

**zeichnet, dass** ein Kalibrierbetrieb durchgeführt wird zur Bestimmung einer charakteristischen Druck-Zeit-Kurve (25) der Druckquelle (20), wobei die Druckquelle gegen eine Absperrung fördert und der Druck bis zum Erreichen des Enddrucks (P$_E$) ansteigt.

3. Hydraulische Antriebseinrichtung mit einer an eine Druckquelle (20) angeschlossenen Kolbenzylindereinheit (10) und einem Umschaltventil (19) zur Steuerung der Kolbenzylindereinheit (10) zur Durchführung eines Arbeitsvorganges aus Lasthüben (LH) und Rückhüben (RH), einer Steuereinrichtung zur Betätigung des Umschaltventils (19) und einem den Druck der Druckquelle (20) während des Lasthubes ermittelnden Drucksensor (22), wobei die Steuereinrichtung (21) die Änderung des Druckes in Zeitintervallen misst und den Arbeitsvorgang dann beendet, wenn der Anstieg des Druckes bei einem Lasthub innerhalb einer vorgegebenen Zeit kleiner ist als ein Grenzwert, **dadurch gekennzeichnet, dass** der Grenzwert ein vorgegebener Grenzwert ist, der im wesentlichen Null beträgt.

4. Hydraulische Antriebseinrichtung nach Anspruch 3, **dadurch gekennzeichnet, dass** die Steuereinrichtung (21) und das Umschaltventil (19) an der Druckquelle (20) angeordnet sind und dass Drucksensoren (22, 23) zur Erfassung der Drücke in den mit der Kolbenzylindereinheit (10) verbundenen Hydraulikleitungen (16,17) Bestandteile eines Druckaggregates (18) sind, an welches die Hydraulikleitungen (16, 17) anschließbar sind, wobei die Drucksensoren auch dann am Druckaggregat (18) verbleiben, wenn die Hydraulikleitungen (16, 17) abgekuppelt werden.

## Claims

1. A method of controlling the pressure supply to a hydraulic piston-cylinder unit (10) connected to a pressure source (20), said unit performing a working operation,
   wherein the change of the hydraulic pressure is measured in time intervals (I) and the working operation is terminated when the rise of the hydraulic pressure in one working stroke is less, within a predetermined period, than a predetermined limit value, **characterized in that**
   the limit value used is a predetermined limit value that is substantially zero.

2. The method of claim 1, wherein a calibrating operation is performed to determine a characteristic pressure-time curve (25) of the pressure source (20), the pressure source supplying against a blocking and the pressure rising until a terminal pressure (P$_E$) is reached.

3. A hydraulic drive means comprising a hydraulic piston-cylinder unit (10) connected to a pressure source (20) and a switching valve (19) for controlling the piston-cylinder unit (10) to perform a working operation of working strokes (LH) and return strokes (RH), and a control means for operating the switching valve (19), wherein a pressure sensor (22) is provided that measures the pressure of the pressure source (20) during the working stroke (LH), and wherein the control means (21) measures the change in pressure in time intervals and terminates the working operation when the rise of the hydraulic pressure in one working stroke is less, within a predetermined period, than a predetermined limit value, **characterized in that** the limit value used is a predetermined limit value that substantially is zero.

4. The hydraulic drive means of claim 3, wherein the control means (21) and the switching valve (19) are arranged at the pressure source (20), and wherein pressure sensors (22, 23) for sensing the pressures in the hydraulic lines (16, 17) connected with the piston-cylinder unit (10) are parts of a pressure unit (18) to which the hydraulic lines (16, 17) may be coupled, the pressure sensors remaining at the pressure unit (18) even when the hydraulic lines (16, 17) are uncoupled.

## Revendications

1. Procédé pour la commande de l'alimentation en pression d'un ensemble cylindre-piston hydraulique (10) raccordé à une source de pression (20), l'ensemble exécutant une opération,
   dans lequel le changement de la pression hydraulique est mesuré dans des intervalles de temps (I) et l'opération est terminée, quand, pendant une durée prédéterminée, l'augmentation de pression hydraulique pendant une course de travail est plus petit qu'un valeur limite,
   **caractérisé en ce que**
   le valeur limite utilisé est un valeur limite prédéterminé qui est sensiblement zéro.

2. Procédé selon la revendication 1, **caractérisé en ce que** une opération de calibrage est exécutée pour déterminer une courbe pression-temps (25) de la source de pression (20), la source de pression délivrant contre un moyen d'arrêt et la pression augmentant jusqu'à ce que la pression finale (P$_E$) est atteinte.

3. Moyen d'entraînement hydraulique comprenant un ensemble cylindre-piston hydraulique (10) raccordé à une source de pression (20) et un soupape d'inversion (19) pour commander l'ensemble cylindre-piston hydraulique (10) afin d'exécuter une opération de travail formée par des courses de travail (LH) et des courses de retour (RH), un moyen de commande pour actionner le soupape d'inversion (19) et un capteur de pression (22) déterminant la pression de la source de pression (20) pendant la course de travail, le moyen de commande (21) mesurant le changement de la pression dans des intervalles de temps et terminant l'opération de travail, quand l'augmentation de pression hydraulique pendant une course de travail est plus petit qu'un valeur limite, **caractérisé en ce que** le valeur limite utilisé est un valeur limite prédéterminé qui est sensiblement zéro.

4. Moyen d'entraînement hydraulique selon la revendication 3, **caractérisé en ce que** le moyen de commande (21) et la soupape d'inversion (19) sont agencés à la source de pression (20) et que des capteurs de pression (22, 23) pour la détection des pressions dans les conduits hydrauliques (16, 17) raccordées à l'ensemble cylindre-piston sont des composantes d'une unité de pression (18) à laquelle on peut raccorder les conduits hydrauliques (16, 17), les capteurs de pression restant à l'unité de pression (18) même si les conduits hydrauliques (16, 17) sont découplés.

# Fig.1

# Fig.2

# Fig.3

**EP 1 511 599 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4864903 A